# FASCICULE DE BREVET EUROPEEN

(11) **EP 2 196 383 B1**
(45) Date de publication et mention de la délivrance du brevet: **19.10.2011**
(21) Numéro de dépôt: 09175133.9
(22) Date de dépôt: 05.11.2009
(51) Int. Cl.: B62D 65/06, B60J 7/20, B62D 65/08, B60R 13/02

(54) **Gabarit de montage d'un enjoliveur de volet de véhicule cabriolet**
Montagelehre für eine Zierkappe eines Rollos für Cabrioletfahrzeug
Jig for a convertible vehicle shutter trim

(30) Priorité: 03.12.2008 FR 0858247
(43) Date de publication de la demande: 16.06.2010
(73) Titulaire: Peugeot Citroën Automobiles SA, 78140 Vélizy-Villacoublay (FR)
(72) Inventeur: Richard, Stéphane, 70400, FRAHIER (FR)
(74) Mandataire: Allain, Laurent

(56) Documents cités:
- EP-A- 1 695 855
- FR-A- 2 780 905

## Description

La présente invention se rapporte à un gabarit de montage d'un enjoliveur de volet de véhicule cabriolet, et à un procédé de montage d'un tel enjoliveur au moyen d'un tel gabarit.

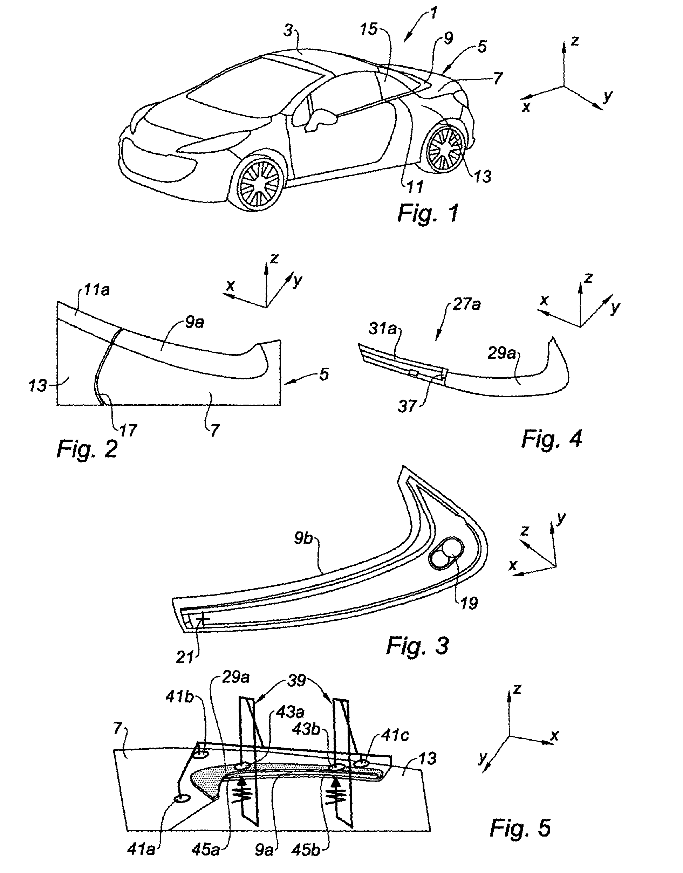

On représenté sur la figure 1 ci-annexée un véhicule cabriolet 1, dont la capote amovible 3 peut être rigide (panneaux articulés entre eux) ou souple (toile rabattable).

Comme cela est connu en soi (voir par exemple demande de brevet FR2890005 au nom de la demanderesse), cette capote 3 peut être conçue de manière à s'escamoter à l'intérieur du coffre 5 du véhicule 1.

Pour ce faire, le volet 7, c'est-à-dire la partie supérieure de ce coffre 5, s'ouvre vers l'arrière du véhicule 1, découvrant ainsi un logement pouvant accueillir la capote 3.

Dans la zone de jointure entre le volet 7 et la capote 3 se trouve classiquement un enjoliveur de volet 9, fixé sur le volet 7 et s'étendant sur pratiquement toute la largeur de celui-ci.

Lorsque le volet 7 est en position fermée, comme cela est représenté sur la figure 1, l'enjoliveur 9 est jointif avec les lécheurs de custodes 11, solidaires de la caisse 13 du véhicule 1 et venant s'appuyer sur les custodes (ou vitres) arrière 15 de ce véhicule.

Ces lécheurs de custodes permettent d'obtenir une liaison étanche entre la caisse 13 et les custodes 15.

Cet enjoliveur 9 se trouve ainsi dans la continuité de ces lécheurs de custodes 11, ce qui procure un effet esthétique satisfaisant.

La fixation de cet enjoliveur 9 sur le volet 7 s'effectue par l'intérieur de ce volet, ce dernier se trouvant alors en position ouverte.

Il existe à présent de nouveaux modèles de véhicules dans lesquels l'enjoliveur de volet, au lieu d'être formé d'un seul élément comme indiqué ci-dessus, est en fait formé de deux éléments séparés, de formes symétriques : un élément droit et un élément gauche, fixés chacun sur le volet 7, et devant être parfaitement alignés respectivement avec les lécheurs de custodes droit et gauche lorsque le volet 7 se trouve en position fermée.

Du fait de l'indépendance de ces deux éléments d'enjoliveur, et de la nécessité d'ouvrir le volet pour fixer ces éléments par l'intérieur de ce volet, on comprend que leur fixation dans une position précise par rapport aux lécheurs de custodes correspondants est nettement plus délicate que dans le cas classique décrit ci-dessus.

La présente invention a ainsi notamment pour but de fournir des moyens permettant de faciliter le montage de ces éléments d'enjoliveur avec une grande précision, de manière qu'ils se trouvent parfaitement alignés avec les lécheurs de custodes 11 lorsque le volet 7 se trouve en position fermée.

On atteint ce but de l'invention avec un gabarit de positionnement d'élément droite ou gauche d'enjoliveur de volet de coffre, comprenant une partie avant apte à se caler en Y sur un lécheur de custode correspondant, une partie arrière de forme correspondant à celle dudit élément d'enjoliveur, cette partie arrière étant reliée de manière amovible à ladite partie avant.

Comme cela résulte de l'énoncé du procédé de mise en oeuvre ci-dessous, un tel gabarit permet, le volet de coffre étant fermé, de positionner correctement l'élément d'enjoliveur par rapport au lécheur de custode correspondant, puis, après avoir détaché la partie arrière de ce gabarit de la partie avant, d'ouvrir le volet et de fixer par l'intérieur du volet, dans la position ainsi obtenue, l'élément d'enjoliveur.

La présente invention se rapporte donc également à un procédé de montage d'un élément d'enjoliveur droit ou gauche sur un volet de coffre de véhicule décapotable, comprenant les étapes suivantes :
- pose de l'élément d'enjoliveur sur le volet,
- recouvrement de cet élément d'enjoliveur et du lécheur de custode correspondant au moyen dudit gabarit correspondant,
- calage de la partie avant dudit gabarit sur ledit lécheur de custode en X, de manière que la zone de liaison entre lesdites parties avant et arrière de gabarit correspondent à la zone de liaison dudit volet avec la caisse dudit véhicule, et en Y, de manière que ladite partie avant de gabarit prenne appui sur ledit lécheur,
- ajustement de la position dudit élément d'enjoliveur par rapport audit volet, à l'aide de ladite partie arrière de gabarit,
- immobilisation de ladite partie arrière de gabarit et dudit élément d'enjoliveur par rapport audit volet,
- détachement de ladite partie arrière de gabarit par rapport à ladite partie avant de gabarit,
- ouverture dudit volet,
- fixation dudit élément d'enjoliveur par l'intérieur dudit volet,
- enlèvement de ladite partie arrière de gabarit.

Comme on peut le comprendre à la lumière de ce qui précède, le procédé selon l'invention permet, le volet se trouvant en position fermée, de positionner correctement l'élément d'enjoliveur concerné, puis de ne pas perdre cette position pendant l'ouverture du volet, ce qui autorise une fixation par l'intérieur de ce volet.

Ainsi, grâce au gabarit et au procédé de montage selon l'invention, on peut obtenir une grande précision de positionnement de chaque élément d'enjoliveur, tout en ayant des fixations invisibles puisque disposées sous l'élément d'enjoliveur.

De préférence, l'immobilisation de ladite partie arrière de gabarit et dudit élément d'enjoliveur par rapport audit volet, est effectuée au moyen de presseurs : de tels presseurs, couramment utilisés dans le domaine de la construction automobile, permettent d'immobiliser plusieurs pièces destinées à être fixées les unes aux autres.

Dans une variante du procédé selon l'invention, on peut prévoir que l'on fixe l'extrémité arrière de l'élément d'enjoliveur sur le volet avant de le recouvrir avec le gabarit selon l'invention, et que l'on ajuste la position de cet élément par rapport au lécheur de custode correspondant en faisant pivoter l'élément d'enjoliveur autour de sa fixation arrière : ceci permet de limiter les degrés de liberté de l'enjoliveur en attendant sa fixation définitive sur le volet de coffre.

D'autres caractéristiques et avantages de la présente invention apparaîtront à la lumière de la description qui va suivre et à l'examen des figures ci-annexées, dans lesquelles :
- la figure 1 est une vue en perspective d'un véhicule cabriolet de l'état de la technique, décrit dans le préambule de la présente description ;
- la figure 2 est une vue de détail et en perspective d'un élément gauche d'enjoliveur de volet de coffre, disposé dans le prolongement du lécheur de custode correspondant ;
- la figure 3 est une vue de dessous et en perspective d'un élément droite d'enjoliveur de volet de coffre ;
- la figure 4 représente, en perspective, un gabarit selon l'invention, adapté pour mettre en place un enjoliveur gauche de volet, tel que celui représenté sur la figure 2 ;
- la figure 5 représente, en perspective, une étape de positionnement d'un élément gauche d'enjoliveur de volet de coffre sur ce volet.

Sur l'ensemble des figures ci-annexées, on a représenté un repère XYZ.

Comme cela est classique dans le domaine automobile, la direction X est parallèle à la direction d'avancement du véhicule, la direction Z correspond à la direction verticale, et la direction Y est perpendiculaire aux deux directions précédentes (direction transversale à la direction d'avancement du véhicule).

Dans le présent document, les termes « avant », « arrière », « supérieur » et « inférieur » s'entendent respectivement par rapport au sens d'avancement du véhicule (selon la direction X) et par rapport à la verticale (direction Z).

On se reporte à présent à la figure 2, sur laquelle on a représenté un élément gauche 9a d'enjoliveur de volet 7 de coffre 5, fixé sur ce volet 7 dans le prolongement du lécheur 11 a de custode correspondant.

Un tel élément d'enjoliveur équipe certains nouveaux modèles de véhicules, et son homologue droit (non représenté) se trouve sur le coté droit du volet 7.

Autrement dit, ces deux éléments d'enjoliveur constituent deux pièces indépendantes et symétriques l'une de l'autre.

Pour des raisons notamment d'esthétique, il est indispensable que chacun de ces éléments d'enjoliveur soit disposé exactement dans le prolongement du lécheur de custode correspondant.

Cela suppose en particulier, comme cela est visible sur la figure 2, un calage parfait en Y de l'élément d'enjoliveur 9a par rapport au lécheur de custode 11a, étant entendu que ces deux pièces sont fixées respectivement sur le volet 7 et sur la caisse 13, et qu'elles sont séparées par la ligne de jointure 17 entre ces deux parties.

Comme indiqué précédemment, l'élément d'enjoliveur 9a est fixé sur le volet 7 par l'intérieur de ce volet, c'est-à-dire par l'intérieur du coffre 5 : cette fixation peut être rendue invisible de l'extérieur, ce qui est particulièrement satisfaisant du point de vue esthétique.

En se reportant à la figure 3, on peut voir que, de préférence, la fixation de chaque élément d'enjoliveur 9b (l'enjoliveur 9b de la figure 3 est l'enjoliveur droit correspondant à l'enjoliveur gauche 9a) s'effectue sur le volet 7 au moyen d'un point d'agrafage 19 disposé dans la partie arrière de cet élément d'enjoliveur, et d'un point de fixation 21, disposé dans la partie avant de cet élément d'enjoliveur.

Le point d'agrafage arrière 19 est fixé en premier sur le volet 7, et l'ajustement en Y de l'élément d'enjoliveur par rapport au lécheur de custode correspondant est effectué par la rotation de cet élément d'enjoliveur autour de son point d'agrafage arrière.

Une fois que la position correcte est trouvée, on met en oeuvre la fixation 21 disposée à l'avant de cet élément d'enjoliveur.

On comprend que du fait de la fixation de cet élément d'enjoliveur par l'intérieur du volet 7, l'alignement parfait de cet enjoliveur avec son lécheur de custode correspondant ne peut s'opérer que par ajustements successifs, nécessitant à chaque fois des opérations d'ouverture et de fermeture du volet 7.

Ceci est peu commode et très consommateur de temps dans une chaîne de montage.

Pour pallier cet inconvénient, la présente invention fournit un gabarit 27a représenté sur la figure 4, comprenant une partie arrière 29a dont la forme correspond à celle de l'élément d'enjoliveur 9a, et une partie avant 31 a adaptée pour se caler en Y sur la feuillure du lécheur de custode 11 a.

Bien entendu, un gabarit de forme symétrique est également fourni pour la mise en place de l'élément d'enjoliveur droit.

Ces parties arrière 29a et avant 31 a du gabarit 27a sont reliées l'une à l'autre de manière détachable, par tout moyen classique à la portée de l'homme du métier (moyen de clipsage, bande velcro, aimant, verrou, etc ...).

Pour monter correctement l'enjoliveur 9a sur le volet 7 au moyen du gabarit 27a, on procède de la manière suivante : avant de mettre en place la custode arrière 15, on place le lécheur de custode 11 a sur la caisse 13.

On pose ensuite l'élément d'enjoliveur 9a sur le volet 7, et on agrafe la partie arrière de cet élément d'enjoliveur sur ce volet avec les moyens d'agrafage 19 ; pour l'instant, on ne met pas en oeuvre les moyens de fixation 21. L'élément d'enjoliveur 9a peut donc pivoter par rapport à sa partie arrière.

On vient ensuite rapporter le gabarit 27a sur l'élément d'enjoliveur 9a et sur la feuillure du lécheur de custode 11 a, de manière que les parties arrière 29a et avant 31 a de ce gabarit viennent se poser respectivement sur cet élément d'enjoliveur et sur cette feuillure de lécheur de custode.

On prend soin de caler la ligne de jointure 37 entre ces parties arrière 29a et avant 31 a du gabarit 27a avec la ligne de jointure 17 entre le volet 7 et la caisse 13 du véhicule.

On prend également soin de caler en Y la partie avant de gabarit 31 a sur la feuillure de lécheur de custode 11 a, si nécessaire au moyen de presseurs, de manière à immobiliser complètement ces éléments l'un par rapport à l'autre.

Les presseurs dont il est question ici, classiquement utilisés dans le montage automobile, sont des moyens permettant de serrer une pièce contre l'autre, et utilisent par exemple la force pneumatique.

Une fois donc que le gabarit 27a est positionné de la sorte, on vient serrer l'élément d'enjoliveur 9a entre la partie arrière du gabarit 29a et le volet 7, également au moyen de presseurs 39, comme cela est représenté sur la figure 5.

Comme on peut le voir sur cette figure, ces presseurs 39 peuvent comprendre typiquement 3 points d'appui 41 a, 41 b, 41 c sur le volet 7, deux points d'appui 43a, 43b sur la partie arrière de gabarit 29a, et deux points d'appui 45a, 45b sous le volet 7.

Une fois que l'élément d'enjoliveur 9a est immobilisé de la sorte, on vient détacher la partie arrière de gabarit 29a de la partie avant 31 a.

On peut alors ouvrir le volet 7 et accéder par l'intérieur de ce volet à la zone de fixation 21 de l'élément d'enjoliveur 9a et mettre en oeuvre les moyens de fixation associés (moyens de vissage ou de clipsage par exemple).

Cette fixation étant effectuée, on peut alors ôter les moyens de presseurs 39 et la partie arrière de gabarit 29a : l'élément d'enjoliveur 9a est ainsi correctement positionné et fixé, ce que l'on peut vérifier en refermant le volet 7 et en constatant l'alignement parfait en Y de cet élément d'enjoliveur 9a par rapport au lécheur de custode correspondant 11 a.

Comme on peut le comprendre à la lumière de la description qui précède, le gabarit et le procédé selon l'invention permettent le positionnement très précis par rapport aux lécheurs de custode correspondants d'éléments d'enjoliveurs droit et gauche indépendants, fixés par l'intérieur du volet du coffre.

On peut de la sorte atteindre une esthétique de même qualité que celle obtenue avec les enjoliveurs de volet de coffre de la technique antérieure, formés d'une seule pièce.

Bien entendu, la présente invention n'est nullement limitée au mode de réalisation décrit et représenté, fourni à titre de simple exemple.

## Revendications

1. Gabarit (27a) de positionnement d'élément droite (9b) ou gauche (9a) d'enjoliveur de volet (7) de coffre (5), comprenant une partie avant (31 a) apte à se caler en Y sur un lécheur (11 a) de custode (15) correspondant, une partie arrière (29a) de forme correspondant à celle dudit élément d'enjoliveur (9a ; 9b), cette partie arrière (29a) étant reliée de manière amovible à ladite partie avant (31 a).

2. Procédé de montage d'un élément d'enjoliveur droit (9b) ou gauche (9a) sur un volet (7) de coffre (5) de véhicule décapotable (1) au moyen d'un gabarit (27a) conforme à la revendication 1, comprenant les étapes suivantes :
- pose de l'élément d'enjoliveur (9a ; 9b) sur le volet (7),
- recouvrement de cet élément d'enjoliveur (9a ; 9b) et du lécheur (11a) de custode (15) correspondant au moyen dudit gabarit (27a) correspondant,
- calage de la partie avant (31 a) dudit gabarit (27a) sur ledit lécheur (11a) de custode (15) en X, de manière que la zone de liaison (37) entre lesdites parties avant (31 a) et arrière (29a) de gabarit correspondent à la zone de liaison (17) dudit volet (7) avec la caisse (13) dudit véhicule, et en Y, de manière que ladite partie avant (31 a) de gabarit prenne appui sur ledit lécheur (11 a),
- ajustement de la position dudit élément d'enjoliveur (9a ; 9b) par rapport audit volet (7), à l'aide de ladite partie arrière (29a) de gabarit,
- immobilisation de ladite partie arrière de gabarit (29a) et dudit élément d'enjoliveur (9a ; 9b) par rapport audit volet (7),
- détachement de ladite partie arrière de gabarit (29a) par rapport à ladite partie avant de gabarit (31 a),
- ouverture dudit volet (7),
- fixation dudit élément d'enjoliveur (9a ; 9b) par l'intérieur dudit volet (7),
- enlèvement de ladite partie arrière de gabarit (29a).

3. Procédé selon la revendication 2, dans lequel on immobilise au moyen de presseurs (39) ladite partie arrière de gabarit (29a) et ledit élément d'enjoliveur (9a ; 9b) par rapport audit volet (7).

4. Procédé selon l'une des revendications 2 ou 3, dans lequel on fixe l'extrémité arrière dudit l'élément d'enjoliveur (9a ; 9b) sur ledit volet (7) avant de le recouvrir avec ledit gabarit (27a), et on ajuste la position de cet élément (9a ; 9b) par rapport au lécheur de custode (11a) correspondant en faisant pivoter cet élément (9a ; 9b) autour de sa fixation arrière.

## Claims

1. Jig (27a) for positioning a right-hand element (9b) or left-hand element (9a) of a trim of the flap (7) of a boot (5), comprising a front part (31a), suited to being fixed in Y on a corresponding sealing strip (11a) of a quarter panel (15), a rear part (29a) of corresponding shape to that of the said trim element (9a; 9b), this rear part (29a) being connected in a detachable manner to the said front part (31a).

2. Method for mounting a right-hand trim element (9b) or left-hand trim element (9a) on a flap (7) of a boot (5) of a convertible vehicle (1) by means of a jig (27a) according to Claim 1, comprising the following steps:
- placing of the trim element (9a; 9b) on the flap (7).
- covering of this trim element (9a; 9b) and of the corresponding sealing strip (11a) of quarter panel (15) by means of the said corresponding jig (27a),
- fixing of the front part (31a) of the said jig (27a) on the said sealing strip (11a) of quarter panel (15) in X, such that the connection zone (37) between the said front (31a) and rear (29a) parts of the jig correspond to the connection zone (17) of the said flap (7) with the body (13) of the said vehicle, and in Y, such that the said front part (31a) of the jig rests on the said sealing strip (11a),
- adjustment of the position of the said trim element (9a; 9b) with respect to the said flap (7), with the aid of the said rear part (29a) of the jig,
- immobilisation of the said rear part (29a) of the jig and of the said trim element (9a; 9b) with respect to the said flap (7),
- detachment of the said rear part (29a) of the jig with respect to the said front part (31a) of the jig,
- opening of the said flap (7),
- fixing of the said trim element (9a; 9b) by the interior of the said flap (7),
- removal of the said rear part (29a) of the jig.

3. Method according to Claim 2, in which the said rear part (29a) of the jig and the said trim element (9a; 9b) are immobilised with respect to the said flap (7) by means of pressers (39).

4. Method according to one of Claims 2 or 3, in which the rear end of the said trim element (9a; 9b) is fixed on the said flap (7) before covering it with the said jig (27a), and the position of this element (9a; 9b) is adjusted with respect to the corresponding quarter panel sealing strip (11a) by pivoting this element (9a; 9b) about its rear fixing.

## Patentansprüche

1. Schablone (27a) zum Positionieren eines rechten (9b) oder linken (9a) Zierblendenelements einer Heckklappe (7) eines Kofferraums (5), die einen vorderen Teil (31a) aufweist, der sich in Y auf einem Streifen (11a) eines entsprechenden Seitenfensters (15) über dem Hinterrad verkeilen kann, einen hinteren Teil (29a) mit einer Form, die der des Zierblendenelements (9a; 9b) entspricht, wobei dieser hintere Teil (29a) abnehmbar mit dem vorderen Teil (31a) verbunden ist.

2. Verfahren zur Montage eines rechten (9b) oder linken (9a) Zierblendenelements auf einer Heckklappe (7) eines Kofferraums (5) eines Kabrioletts (1) mittels einer Schablone (27a) nach Anspruch 1, das die folgenden Schritte aufweist:
- Auflegen des Zierblendenelements (9a; 9b) auf der Heckklappe (7),
- Abdecken dieses Zierblendenelements (9a; 9b) und des Streifens (11a) des entsprechenden kleinen Seitenfensters (15) über dem Hinterrad mittels der entsprechenden Schablone (27a),
- Verkeilen des vorderen Teils (31a) der Schablone (27a) auf dem Streifen (11a) des kleinen Seitenfensters (15) über dem Hinterrad in X derart, dass der Verbindungsbereich (37) zwischen dem vorderen Schablonenteil (31a) und dem hinteren Schablonenteil (29a) dem Verbindungsbereich (17) der Heckklappe (7) mit der Karosserie (13) des Fahrzeugs entspricht, und in Y derart, dass der vordere Teil (31a) der Schablone auf dem Streifen (11a) aufliegt,
- Justieren der Position des Zierblendenelements (9a; 9b) in Bezug zu der Heckklappe (7) mit Hilfe des hinteren Schablonenteils (29a),
- Stillstellen des hinteren Schablonenteils (29a) und des Zierblendenelements (9a; 9b) in Bezug zu der Heckklappe (7),
- Ablösen des hinteren Schablonenteils (29a) in Bezug zu dem vorderen Schablonenteil (31a),
- Öffnen der Heckklappe (7),
- Befestigen des Zierblendenelements (9a; 9b) über das Innere der Heckklappe (7),
- Entfernen des hinteren Schablonenteils (29a).

3. Verfahren nach Anspruch 2, bei dem man mit Andrückelementen (39) den hinteren Schablonenteil (29a) und das Zierblendenelement (9a; 9b) in Bezug zu der Heckklappe (7) stillstellt.

4. Verfahren nach einem der Ansprüche 2 oder 3, bei dem man das hintere Ende des Zierblendenelements (9a; 9b) auf der Heckklappe (7) befestigt, bevor man sie mit der Schablone (27a) abdeckt und man die Position dieses Element (9a; 9b) in Bezug zu dem Streifen des entsprechenden kleinen Seitenfensters (11a) über dem Hinterrad justiert, indem man dieses Element (9a; 9b) um seine hintere Befestigung schwenken lässt.
